# EUROPEAN PATENT APPLICATION

(11) **EP 1 391 808 A1**
(43) Date of publication of application: **25.02.2004**
(21) Application number: 02018901.5
(22) Date of filing: 23.08.2002
(51) Int. Cl.: G06F 3/033, G06F 3/00

(54) **Method for controlling a man-machine interface unit**

(71) Applicant: Sony International (Europe) GmbH, 10785 Berlin (DE)
(72) Inventor: Rapp, Stefan, c/o Sony International (Europe) GmbH, 70327 Stuttgart (DE); Settele-Raspl, Claudia, Sony Intern. (Europe) GmbH, 70327 Stuttgart (DE); Strube, Michael, c/o European Media Laboratoy GmbH, 69118 Heidelberg (DE)
(74) Representative: Müller - Hoffmann & Partner

(57) **Abstract**

A method for operating and/or for controlling a man-machine interface unit (MMI) is suggested, wherein a modality fusion component (MFC) is involved for fusing different modalities and wherein a real-time/online process of registering said different modalities is performed for said modality fusion component (MFC) so as to allow a flexible dynamic configuration of multi-modal input to and/or output by said man-machine interface unit (MMI).

## Description

The present invention relates to a method for operating and/or for controlling a man-machine interface unit and more particular to a method for operating and/or for controlling a man-machine interface unit, wherein a recognizer registration or an analyzer registration for modality fusion and in particular for multi-modal integration is performed.

Nowadays, electronic equipment and appliances involving man-machine interfaces to establish an easy and reliable interaction between a human user and an application system become more and more popular. It is assumed that a higher degree of convenience and of reliability can be achieved by using information from utterances of a user employing multiple and different modalities such as usual verbal speech, gesture, haptics, and/or the like.

Known methods for operating and/or for controlling man-machine interface units are far beyond from being flexible although they may offer a variety of modalities at the same time. The reason for that is that common systems are restricted and fixed with respect to the number of different modalities and with respect of the kind of said different modalities itself.

It is an object of the present invention to provide a method for operating and/or for controlling a man-machine interface unit which is capable of supporting a large variety of different modalities without having necessary a priori knowledge of said modalities and their combinations and which is therefore in particular flexible and reliable.

The subject is achieved by a method for operating and/or for controlling a man-machine interface unit according to the invention with the characterizing features of claim 1. Preferred embodiments are within the scope of the dependent subclaims. Additionally, the object is achieved by an apparatus according to claim 11 and by a computer program product according to the features of claim 12.

The suggested method for operating and/or for controlling a man-machine interface unit according to the present invention involves a modality fusion component or process for combining, interpreting and/or fusing inputs or sources, in particular recognizers or analyzers of different modalities and/or said different modalities itself. To allow a flexible dynamic configuration of multi-modal input to said man-machine interface unit a real-time or online process of registering said inputs/sources - in particular said recognizes or analyzers of said different modalities and/or of said different modalities itself is performed for said modality fusion component or process.

It is therefore a basic aspect of the present invention to perform for a modality fusion component or process a process of registering inputs or sources of different modalities in a real-time/online manner, i.e. during the performance of a method for operating and/or for controlling said man-machine interface unit. Therefore, no a priori knowledge about the different modalities and their combination or fusion is necessary.

According to a preferred and advantageous embodiment of the present invention a taxonomy with respect to the different modalities is involved in the process of registering. In particular said taxonomy is involved in registering uni- and multi-modal modalities of said inputs or sources. Additionally or alternatively said taxonomy is involved for use with a multi-modal integration process, in particular within said modality fusion component.

It is further advantage to use a taxonomy with is extensible, in which case said taxonomy may be extended during the performance of the method for operating and/for controlling said man-machine interface unit, in particular in a real-time and/or online manner.

According to a further preferred embodiment of the method for operating and/or for controlling a man-machine interface unit a taxonomy is involved which is based essentially on the entirety of all human modalities. Therefore, according to the present invention any combination of modalities is included by involving such a taxonomy, which makes the inventive method for operating and/or for controlling a man-machine interface unit flexible and convenient for the user.

Sometimes, inputs or outputs of different modalities have a consistent interpretation if they have a well-defined temporal and/or spatial relationship with respect to each other. Therefore, it is of particular advantage according to a preferred embodiment of the present invention to use a taxonomy with a proximity concept at least with respect to space and/or time.

In another embodiment of the inventive method for operating and/or for controlling a man-machine interface unit involved recognizer and/or analyzer indicated to said modality fusion component and/or to said multi-modal integration component the modality they analyze, in particular when they connect or are connected to said modality fusion process and/or to said multi-modal integration process.

It is of further advantage in a process of combining, integrating and/or fusing with respect to different modalities to involve a process of merging semantics with respect to said different modalities, in particular in said modality fusion component and/or in said multi-modal integration process.

It is a further aspect of the present invention to provide a system, an apparatus, a device, and/or the like for operating and/or for controlling a man-machine interface unit which is in each case capable of performing and/or realizing the inventive method for operating and/or for controlling a man-machine interface unit and/or of its steps.

Additionally, it is a further aspect of the present invention to provide a computer program product comprising computer programs means which is adapted to perform and/or to realize the inventive method for operating and/or for controlling a man-machine interface unit or its steps, when it is executed on a computer, a digital signal processing means and/or the like.

The above-mentioned aspects and further advantages of the present invention will become more elucidated taking into account the following remarks:

As already indicated above, the present invention also presents a method to register recognizers and/or analyzers of different modalities for a modality fusion component. A taxonomy of modalities is used in registering uni- or multi-modal recognizers for use with a multi-modal integration component, allowing dynamic configuration of multi-modal input.

Commonly, modalities are fixed during the development and usage of multi-modal systems. E.g., there are systems that use speech and gestures as modalities, others that use speech and keyed input, gestures and keys etc.

In prior art, no flexible system is configured at runtime, but would be desirable to have one: e.g. during use, speech recognizer can be switched off to save memory usage, keyboard is removed to save space, new technology is developed that recognizes smells, another speech recognizer is added to an already existing, a keyboard is added to allow easier typing. As current technologies assume the number and kind of input modalities being fixed at development time, it is difficult or impossible to attach new modalities or specialised input devices later.

A common language is used to describe semantics of an interaction through any modality. Recognizers/analyzers tell the modality which they analyze when connecting to the modality fusion component. Modality fusion can make use of general knowledge of that modality when it merges the semantics with other modalities semantics. The (possible hierarchic) ontology/taxonomy of modalities is fixed, but could also be extensible.

Possible configurations over time may be
1. speech analysis --- modality fusion --- dialog manager
   speech analyzer connects to modality fusion stating that it analyzes modality "linguistic/acoustic/discourse".
2. speech analyzer, gesture analyzer --- modality fusion --- dialog manager
   gesture analyzer connects to modality fusion stating that it analyzes modalities "analogue/graphic/position" and "linguistic/graphic/gestural_notation".
3. keyboard+textanalyzer, speech analyzer, gesture analyzer --- modality fusion --- dialog manager
   keyboard (plus understanding component connects to modality fusion stating that it analyzes modality "linguistic/haptic/typed".
4. keyboard+textanalyzer, gesture analyzer --- modality fusion --- dialog manager
   speech analyzer leaves configuration.

The use of taxonomies allows to make re-use of certain information relating to a combination of different modalities. E.g. in the example above, a linguistically presented deictic expression (a reference to an object outside the modality, e.g. of the real world), such as a spoken "here" can be combined well with a position definition by a gesture, given certain time restrictions (a certain proximity in time). Given an adequate representation of such knowledge (set in relation to the taxonomy), we can infer that a deictic expression presented in typed text fits well to a position specificating gesture, but other restrictions wrt. proximity in time hold here (as it's more difficult to point and type at the same time.)

Crucial in that respect is, that the properties, on which decisions about a joint interpretation of modalities are based, are properly attributed to the right place in the taxonomy (in the example that deictic expressions are attributed to "linguistic", whereas the reference is attributed to "analogue/graphic/position", the proximity in time to the diversity of the used modality) and the likelihood of a linking of the deictic expression with a referenced object as a function of the three items.

Ideally, the taxonomy should be fixed and fully cover all of the human modalities to allow maximum extensibility. The added new modalities can be described in terms of the fixed set of possible terms of the modality taxonomy, which has to be standardized in some way.

The invention allows for a separated development of media fusion and modality recognizers/analyzers. It allows for joined development of various different multi-modal systems and further for dynamic exchange of modalities, e.g. replace keyed input by handwritten input or speech at runtime and for integration of new combinations of modality analyzers without the need to redesign modality fusion.

In the following, further advantages and aspects of the present invention will be described taking reference to the accompanying figures.

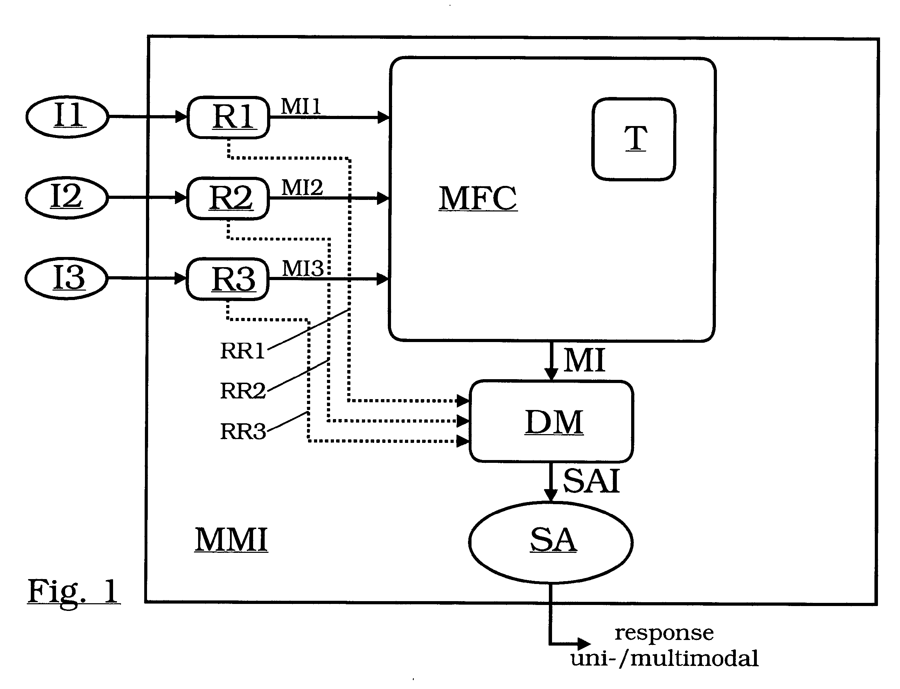

- **Fig. 1**: is a schematic block diagram describing a preferred embodiment of the inventive method for controlling and/or for operating a man-machine interface unit.

The man-machine interface unit MMI shown in Fig. 1 consists of a dialog manager DM, which is capable of receiving information and in particular recognition results from three different recognizers/analyzer R1 to R3 having in general different modalities as well as information and controlling structures from a modality fusion component MFC which includes a multi-modal integration component MIC and also a taxonomy section T.

Upon receipt of input signals I1 to I3 to which said different recognizers R1 to R3 are responsive, respectively, said recognizers/analyzers R1 to R3 analyze and recognize the information content conveyed with said input signals I1 to I3. Each of said recognizers/analyzers R1 to R3 generate two output signals, the first of which being a respective modality information signal MI1 to MI3 which is input to said modality fusion component MFC and which indicate the modalities analyzed by the respective recognizer/analyzer R1 to R3 respectively. The other output signal generated by said recognizer/analyzer R1 to R3 is the recognition result RR1 to RR3 obtained from input signals I1 to I3, respectively, which is transferred to the dialog manager DM.

Upon receipt of the recognition results RR1 to RR3 from said recognizer/analyzer R1 to R3 and modality information MI received from said modality fusion component based on the action of a multi-modal integration process and the taxonomy section T the dialog manager DM generates respective system action information SAI which is representative to a distinct system action SA in response to the received input signals I1 to I3.

The system action SA may be a response in uni-modal or multi-modal form and/or it may also contain a system action which initiates an extension of the content of the taxonomy section T of the modality fusion component MFC.

## Claims

1. Method for operating and/or for controlling a man-machine interface unit (MMI),
- wherein a modality fusion component (MFC) or process is involved for combining, integrating and/or fusing inputs or sources, in particular recognizers or analyzers of different modalities and/or said different modalities itself, and
- wherein a real-time/online process of registering said inputs or sources, in particular said recognizers or analyzers of said different modalities and/or of registering said different modalities itself, is performed for said modality fusion components (MFC) or process,
- so as to allow a flexible dynamic configuration of multi-modal input to and/or output by said man-machine interface unit (MMI).

2. Method according to claim 1,
wherein a taxonomy (T) of modalities is involved in said process in registering.

3. Method according to claim 2,
wherein said taxonomy (T) is involved in registering uni- and/or multi-modal modalities of said inputs or sources.

4. Method according to any one of the claims 2 and 3,
wherein said taxonomy (T) is involved for use with a multi-modal integration process.

5. Method according to any one of the claims 3 to 4,
wherein a taxonomy (T) is involved which is extensible.

6. Method according to claim 5,
wherein said taxonomy (T) is extended in a real-time and/or online manner.

7. Method according to any one of the claims 2 to 6,
wherein a taxonomy (T) is involved which is based essentially on the entirety of all human modalities.

8. Method according to any one of the claims 2 to 7,
wherein a taxonomy (T) is used, which involves a proximity concept at least with respect to space and/or to time.

9. Method according to any one of the preceding claims,
wherein involved recognizers and/or analyzers indicate to said modality fusion component (MFC) and/or to said multi-modal integration process the modality they analyze, in particular when they connect or are connected to said modality fusion component (MFC) and/or to said multi-modal integration process.

10. Method according to any one of the preceding claims,
wherein in a process of combining, integrating and/or fusing with respect to different modalities a process of merging semantics with respect to said different modalities is involved in said modality fusion component (MFC) and/or said multi-modal integration process.

11. Man-machine interface unit or system for operating and/or for controlling the same,
which is capable of performing and/or realizing the method for operating and/or controlling a man-machine interface unit according to any one of the claims 1 to 10 and/or the steps thereof.

12. Computer program product, comprising computer program means adapted to perform and/or to realize a method for operating and/or for controlling a man-machine interface unit according to any one of the claims 1 to 10 and/or the steps thereof, when it is executed on a computer, a digital signal processing means, and/or the like.
